# EUROPÄISCHE PATENTSCHRIFT

(11) **EP 1 424 955 B1**
(45) Veröffentlichungstag und Bekanntmachung des Hinweises auf die Patenterteilung: **23.07.2008**
(21) Anmeldenummer: 02769981.8
(22) Anmeldetag: 23.08.2002
(51) Int. Cl.: A61C 17/34, A61C 17/40

(54) **ZAHNBÜRSTE**
TOOTHBRUSH
BROSSE A DENTS

(30) Priorität: 14.09.2001 DE 10145320; 16.02.2002 DE 10206493
(43) Veröffentlichungstag der Anmeldung: 09.06.2004
(73) Patentinhaber: Braun GmbH, 61476 Kronberg (DE)
(72) Erfinder: DRÖSSLER, Michael, 30989 Gehrden (DE); FRITSCH, Thomas, 65817 Eppstein (DE); HARMS, Michael, 61440 Oberursel (DE); SCHWARZ-HARTMANN, Armin, 55234 Wendelsheim (DE)
(86) Internationale Anmeldenummer: PCT/EP2002/009417
(87) Internationale Veröffentlichungsnummer: WO 2003/024353

(56) Entgegenhaltungen:
- WO-A-99/63905
- DE-A- 19 802 904
- FR-A- 2 228 352
- US-A- 3 945 076

## Beschreibung

Die vorliegende Erfindung betrifft eine elektrische Zahnbürste mit einem Handteil, einem Borstenträger, der an einem Kopfabschnitt des Handteils um eine Borstenträgerdrehachse drehbar gelagert ist, sowie einem Antrieb für den Borstenträger, wobei der Antrieb einen am Handteil angeordneten Motor sowie einen Übertrager aufweist, der eine Antriebsbewegung des Motors auf den Borstenträger überträgt.

Eine Zahnbürste der genannten Art ist aus der WO 01/19281 A2 bekannt, bei der ein etwa kreisrundes Borstenfeld rotatorisch oszillierend antreibbar ist. Ein drehbar im Bürstenkopf gelagerter Borstenträger ist mit einem Übertrager gekoppelt, der in Längsrichtung hin- und hergehend angetrieben wird, und zwar von einer an einem Getrieberad befestigten Kurbel. Ein solcher Kurbelantrieb benötigt jedoch relativ viel Platz. Zum anderen ist er aufgrund der benötigten Bauteile aufwendig und teuer, so dass er nur für hochpreisige Zahnbürsten in Frage kommt.

Aus der US 4,149,291 ist weiterhin eine elektrische Zahnbürste bekannt, bei der die rotatorische Antriebsbewegung des Motors durch einen Übertrager auf den Borstenträger übertragen wird. Dieser Übertrager ist einerseits exzentrisch an die Antriebswelle des Motors gekoppelt und andererseits im Bereich seines Austritts aus dem Handteil ringförmig gelagert, so dass er eine kegelförmige Antriebsbewegung beschreibt. Um eine spezielle in etwa elliptische Bewegung des auf dem Übertrager sitzenden Aufsteckbürstchen zu erreichen, besteht der Übertrager aus einer Feder, die einachsig nachgibt, so dass die kegelförmige Antriebsbewegung des Übertragers in dieser einen Achse nur begrenzt übertragen wird. Dieser Antrieb ist jedoch aufgrund der speziellen Gestaltung des Übertragers aufwendig und teuer. Zum anderen neigt er aufgrund seiner federnden Ausbildung zur Ermüdung. Darüber hinaus ist die elliptische Antriebsbewegung des Zahnbürstenkopfs in verschiedener Hinsicht nachteilig.

Die DE 20112320 U1 beschreibt weiterhin eine elektrische Zahnbürste, bei der der Bürstenträger mit dem darauf befestigten Borstenfeld starr auf einem Ende einer Antriebswippe sitzt, die im Inneren eines hohlen Bürstenstiels angeordnet ist. Die Antriebswippe ist mehrachsig wippbar gelagert und wird von piezoelektrischen Elementen, die am anderen Ende der Antriebswippe zwischen dieser und der Bürstenstielinnenwandung angeordnet sind, zu zweiachsigen Schwingungen angeregt. Der fest auf dem Wippenende sitzende Borstenträger führt jedoch nur relativ kleine Kabelbewegungen aus. Insbesondere können keine das Borstenfeld in sich verdrehende Rotationsbewegungen ausreichender Größe erreicht werden, die ein optimales Zahnputzergebnis bewirken würden.

Die DE 198 02 904 A offenbart eine elektrische Zahnbürste mit einem Handteil, einem Borstenträger, der an einem Kopfabschnitt des Handteils um eine Borstenträgerdrehachse drehbar gelagert ist, sowie einem Antrieb für den Borstenträger, wobei der Antrieb einem am Handteil angeordneten Motor sowie einem Übertrager aufweist, der eine Antriebsbewegung des Motors auf den Borsten-träger überträgt.

Der vorliegenden Erfindung liegt daher die Aufgabe zugrunde, eine verbesserte Zahnbürste der eingangs genannten Art zu schaffen, die Nachteile des Standes der Technik vermeidet und letzteren in vorteilhafter Weise weiterbildet. Vorteilhafterweise soll eine äußert kostengünstig zu fertigende Zahnbürste mit einem einfachen und dennoch effektiven Antrieb geschaffen werden.

Diese Aufgabe wird erfindungsgemäß durch eine Zahnbürste gemäß Patentanspruch 1 gelöst. Bevorzugte Ausgestaltungen der Erfindung sind Gegenstand der Unteransprüche.

Es ist also erfindungsgemäß als Übertrager eine Antriebswippe vorgesehen, die mehrachsig wippbar gelagert und vom Motor derart antreibbar ist, dass sie eine etwa doppelkegelförmige Umlaufbewegung ausführt. Die Verbindung zwischen der Antriebswippe und dem Borstenträger ist um eine zur Borstenträger-Drehachse parallele Gelenkachse gelenkig ausgebildet. Die Enden der Übertragerwippe führen Kreis- bzw. Elipsenbewegungen aus. Im Gegensatz zur DE 20112320 U1 führt der Borstenträger jedoch nicht eine unmittelbar entsprechende Bewegung aus, da er nicht starr auf dem Ende der Übertragerwippe sitzt. Der Bürstenträger ist von der Verbindung mit der Wippe beabstandet zusätzlich am Handteil bzw. dem Kopfabschnitt des Gehäuses der Zahnbürste um eine feste Drehachse drehbar gelagert. Die gelenkige Verbindung mit der Übertragerwippe erlaubt eine rotatorische Oszillation um die Borstenträgerdrehachse.

Die Übertragerwippe ist in einem Abschnitt zwischen ihren freien Enden in einer Weise gelagert, dass die beiden links und rechts des Lagers befindlichen Abschnitte der Antriebswippe auf Kegelmänteln, insbesondere Kreiskegelmänteln umlaufen, deren Spitzen im Bereich des Lagers angeordnet sind.

In Weiterbildung der Erfindung kann vorgesehen sein, dass zumindest ein Teil der Bewegung der Antriebswippe in einer Ebene parallel zur Drehachse des Bürstenträgers nicht übertragen wird. Die gelenkige Verbindung zwischen dem Borstenträger und dem Übertrager kann neben ihrer Gelenkigkeit um die Gelenkachse einen weiteren Freiheitsgrad aufweisen, der einen entsprechenden Freigang des Übertragers relativ zum Borstenträger, insbesondere eine translatorische Bewegung zwischen der Antriebswippe und dem Borstenträger in Richtung der Gelenkachse zulässt. Hierzu kann vorzugsweise das bürstenkopfseitige Ende der Antriebswippe mit dem Bürstenkopf über eine nutartige Ausnehmung gekoppelt sein, die die Bewegung des freien Endes der Antriebswippe in Längsrichtung der Nut unwirksam macht, so dass eine Bewegung lediglich im wesentlichen senkrecht zu dieser Nut von der Antriebswippe auf den Bürstenkopf übertragen wird.

In alternativer Weiterbildung der Erfindung kann der Borstenträger entlang der Borstenträgerdrehachse verschieblich am Handteil gelagert sein, um eine zweite Antriebsbewegung des Borstenträgers, insbesondere eine Stocherbewegung parallel zur Hauptachse der Borsten erreichen zu können. Hierzu wird die kreisbahnförmige Bewegung des borstenträger-seitigen Endes der Antriebswippe in zwei Achsen auf den Borstenträger übertragen. Neben der Umwandlung in die rotatorische Bewegung des Borstenträgers um dessen Drehachse wird die Bewegung des borstenträger-seitigen Endes der Antriebswippe auch in Richtung der Drehachse auf den Borstenträger übertragen, so dass dieser entlang der Drehachse eine translator-ische, hin- und hergehende Bewegung ausführt. Hierzu besitzt die gelenkige Verbindung zwischen dem Borstenträger und der Antriebswippe in Richtung der Gelenkachse wirksame Übertragungsmittel, die die entsprechenden Bewegungen der Antriebswippe in Richtung der Gelenkachse auf den Borstenträger zumindest teilweise übertragen. Vorzugsweise kann die Antriebswippe in einer Ausnehmung im Borstenträger sitzen, deren Längserstreckung in Richtung der Gelenkachse kleiner ist als die Amplitude der Bewegung des borstenträgerseitigen Endes der Antriebswippe in dieser Richtung.

Durch die Ausdehnung und Erstreckung der Ausnehmung im Borstenträger, in der das borstenträgerseitige Ende der Antriebswippe sitzt, kann also die Bewegung des Borstenträgers gesteuert werden. Sitzt das borstenträgerseitige Ende der Antriebswippe in einer Ausnehmung, die sich langlochartig parallel zur Borstenträger-Drehachse erstreckt, wird entsprechend der Länge des Langlochs die Bewegung der Antriebswippe bzw. deren Komponente parallel zur Borstenträger-Drehachse nur zum Teil oder auch gar nicht auf den Borstenträger übertragen. Die Komponente der Bewegung der Antriebswippe senkrecht zur Borstenträger-Drehachse wird hingegen vollständig in eine rotatorisch oszillierende Bewegung des Borstenträgers umgesetzt.

Sitzt hingegen das borstenträgerseitige Ende der Antriebswippe in einer langloch-artigen Ausnehmung, die sich quer zur Borstenträger-Drehachse erstreckt, wird entsprechend der Länge des Langlochs die Antriebsbewegung der Antriebswippe bzw. deren Komponente quer zur Drehachse des Borstenträger nur zum Teil oder auch gar nicht in eine Drehbewegung des Borstenträgers um seine Drehachse umgesetzt. Die Putzbewegung parallel zur Drehachse des Borstenträgers wird hingegen vollständig übertragen. Durch eliptische Gestaltungen der Ausnehmung im Borstenträger, in der das borstenträgerseitige Ende der Antriebswippe sitzt, können entsprechende Anteile der jeweiligen Bewegungskomponenten übertragen werden.

In Weiterbildung der Erfindung erstreckt sich die Borstenträger-Drehachse im wesentlichen zentrisch durch den Borstenträger, und zwar im wesentlichen parallel zu der von dessen Borsten definierten Hauptachse. Dementsprechend kann ein In-Sich-Verdrehen des Borstenträgers erreicht werden. Ist der Borstenträger zusätzlich verschieblich entlang der Drehachse, kann zudem eine Stocherbewegung erzeugt werden. Soll die doppelkegelförmige Antriebsbewegung des Übertrager möglichst vollständig ausgenutzt werden, kann der Borstenträger in Richtung der Gelenkachse im wesentlichen spielfrei auf der Übertragerwippe sitzen, wobei die Verbindung zwischen Antriebswippe und Borstenträger dennoch in Richtung parallel zur Borstenträger-Drehachse gelenkig, vorzugsweise nach Art eines Kugelgelenks gelenkig ausgebildet ist, um den durch die Umlaufbewegung der Übertragerwippe entstehenden Winkelversatz zuzulassen. Es entsteht eine oszillierende Rotationsbewegung des Borstenträgers um seine feste Drehachse am Zahnbürstengehäuse. Zusätzlich wird eine Stocherbewegung in Richtung der Drehachse erreicht. Die Doppelkegelbewegung des Übertragers wird in eine zweiachsige Bewegung des Borstenträgers umgewandelt.

Vorteilhafterweise wird die Übertragerwippe selbst weder in eine Rotation um die Längsachse noch in eine Translationsbewegung in Richtung der Längsachse versetzt, so dass eine einfache Lagerung und eine einfache Koppelung des Übertragers an den Motor vorgesehen sein kann, wodurch der Antrieb beträchtlich vereinfacht und kostengünstig herstellbar wird. Zudem kann eine einfache Abdichtung des Antriebs erreicht werden. Insbesondere kann eine Dichtung zur Abdichtung der Antriebswippe gegenüber dem Zahnbürstengehäuse von der Antriebswippenlagerung gebildet sein. Letztere kann als Lagerring bzw. Lagerhülse ausgebildet sein, die als Stopfen zwischen der Übertragerwippe und dem Gehäuse sitzt. Eine solche Abdichtung im Bereich des Lagers verhindert, dass Feuchtigkeit und Schmutz oder Zahnpasta aus dem Bereich des Bürstenkopfs in den Handgriffbereich der Zahnbürste gelangen. Die Abdichtung gestaltet sich insofern einfach und dauerhaft, als eine Relativbewegung zwischen Antriebswippe und Lager bzw. Abdichtung praktisch nicht vorhanden ist. Insbesondere findet eine Translations- oder Rotationsbewegung der Antriebswippe relativ zum Lager bzw. der Abdichtung nicht statt. Die einzige Bewegung der Antriebswippe besteht darin, dass diese auf einem Doppelkegel, dessen Spitzen im Bereicht der Lagerung bzw. Dichtung zusammenlaufen bzw. angeordnet sind, umläuft. Insofern besteht beispielsweise die Möglichkeit, das Lager für die Antriebswippe durch Anspritzen einer elastischen Komponente an das Zahnbürstengehäuse zu bilden. Des weiteren kann das Lager bzw. die Dichtung für die Antriebswippe auch mittels einer Gummimanschette, eines O-ringes oder dergleichen, welche bzw. welcher auf die Antriebswippe gesteckt wird, realisiert werden.

Um die Amplitude der Antriebsbewegung des Borstenträgers einstellen zu können, kann vorgesehen sein, dass die Lagerung des Übertragers in Längsrichtung zwischen dem Motor und dem Borstenträger bewegbar ist, so dass sich entsprechend die Hebelverhältnisse an der Übertragerwippe ändern. Insbesondere kann ein längsverschieblicher Lagerring Verwendung finden.

An ihrem motorseitigen Ende ist die Antriebswippe über einen Exzentermechanismus mit der Motorwelle gekoppelt. Vorzugsweise kann die Antriebswippe an einem drehfest auf der Motorwelle sitzenden Exzenter nach Art eines Kugelgelenks gelenkig angelenkt sein, so dass das motorseitige Ende der Antriebswippe auf einer Kreisbahn angetrieben wird. Eine besonders einfache Gestaltung besteht darin, dass in dem auf der Motorwelle sitzenden Exzenterstück eine zur Motorwelle exzentrisch angeordnete Ausnehmung vorgesehen ist, in der der Übertrager sitzt. Die Ausnehmung ist zweckmäßigerweise konisch bzw. sich in anderer Weise zur Antriebswippe hin erweitert ausgebildet, um die kegelförmige Bewegung zu gestatten.

Vorteilhafterweise ist die Antriebswippe einerseits unmittelbar mit dem auf der Motorwelle sitzenden Exzenter und andererseits unmittelbar mit dem Borstenträger verbunden. Die Teilezahl des Antriebs ist dadurch minimal.

Es versteht sich, dass die Antriebswippe im wesentlichen starr ausgebildet sein kann, so dass die durch den Motor an einem Ende der Antriebswippe erzeugte Bewegung entsprechend dem Hebelverhältnis vom anderen Ende der Antriebswippe an den Borstenträger übertragen wird. Die Antriebswippe kann jedoch auch beispielsweise aus Federstahldraht oder einem sonstigen Material mit Federeigenschaften, z. B. einem Kunststoffstab oder dergleichen bestehen. Hierdurch kann ein Überlastschutz erreicht werden, der beispielsweise beim Blockieren des Borstenträgers aufgrund zu hohem Antriebsdruck während des Zahnreinigungvorgangs Beschädigungen des Antriebs verhindert. Vorzugsweise ist die Antriebswippe geradlinig stabförmig frei von Abkröpfungen, Winkelstücken etc. ausgebildet.

Der Motor mit seiner Antriebswelle ist zweckmäßigerweise in Längsrichtung der Zahnbürste ausgerichtet und im Inneren des Handteils gelagert. Hierdurch kann eine kompakte, kleinbauende Gestaltung erreicht werden.

Diesbezüglich besteht bei bislang bekannten Handzahnbürsten ein weiterer Nachteil darin, dass die Befestigung bzw. Lagerung des Antriebsmotors im Gehäuse bislang unbefriedigend ist. Zum Teil werden teuere und aufwendige Lösungen realisiert, die für elektrische Zahnbürsten im Niedrigpreissegment nicht geeignet sind. Andererseits sind bekannte Lösungen oft zu großbauend.

Erfindungsgemäß wird zur einfachen Montage und platzsparenden Befestigung des Motors ein motortragendes Chassis vorgesehen, dass zur Motorlagerung im Inneren eines Zahnbürstengehäuseabschnitts an diesem befestigbar ist, wobei das Chassis mitsamt dem daran befestigten Motor durch eine stirnseitige Öffnung des entsprechenden Zahnbürstengehäuseabschnitts in Zahnbürstenlängsrichtung in den Zahnbürstengehäuseabschnitt einschiebbar und an diesem fest verrastbar ist. Hierdurch kann die Montage beträchtlich vereinfacht werden. Es ist quasi eine vormontierte Antriebspatrone vorgesehen, die einfach in das Innere des Zahnbürstengehäuses eingeschoben und daran verrastet werden kann. Vorteilhafterweise ist das Chassis ohne zusätzliche Bauteile am Zahnbürstengehäuse fixierbar. Die geradlinige Montage ohne Schraub- oder Drehbewegungen kann besonders einfach und rasch durchgeführt werden. Eine Drehbewegung, wie sie beispielsweise beim Verriegeln von Bajonettverschlüssen notwendig ist, kann eingespart werden. Es versteht sich, daß die spezielle Lagerung und Montierbarkeit des Motors unabhängig von der zuvor beschriebenen doppelkegelförmigen Antriebsbewegung des Übertragers Vorteile besitzt und insofern selbständig Gegenstand der Erfindung ist.

Insbesondere trägt das Chassis nicht nur den Motor, sondern auch eine Schalteinheit mit elektrischen Kontakten und weist ein Batterieaufnahmefach auf, in das eine Batterie oder ein Akku oder dergleichen eingelegt werden kann. Die gesamt vormontierte Einheit mitsamt Motor, Batterie und Schalteinheit kann als Antriebspatrone geradlinig ohne Drehbewegung in den Zahnbürsten-gehäuseabschnitt eingeschoben werden. Die dabei automatisch erfolgende Verrastung fixiert die gesamte Antriebseinheit.

In Weiterbildung der Erfindung sind an dem Chassis und dem Zahnbürstengehäuseabschnitt zumindest ein radial federnder Rasthaken sowie eine damit zusammenwirkende Rastausnehmung vorgesehen, die beim axialen Einschieben des Chassis miteinander in Eingriff gelangen. Vorzugsweise sind die Rasthaken sowie das hierzu komplementäre Gegenstück integral am Chassis sowie dem Zahnbürstengehäuse angeformt. Separate Befestigungsteile brauchen bei der Montage nicht bereitgestellt und berücksichtigt werden.

Grundsätzlich können die Rasthaken am Zahnbürstengehäuse vorgesehen sein und in einer Rastausnehmung am Chassis einrasten. In Weiterbildung der Erfindung jedoch sind die Rastnasen am Chassis vorgesehen, so dass sie beim Einschieben des Chassis zunächst radial nach innen federn und sich über bzw. unter das Gehäuse schieben, bis sie die Rastausnehmungen im Zahnbürstengehäuse erreichen und dort wieder in ihre Ausgangstellung zurückfedern können. Durch eine solche Anordnung kann in einfacher Weise sichergestellt werden, dass durch Nach-Innen-Drücken der Rastzungen die Verrastung wieder gelöst und das Chassis herausgezogen und damit die Einheit demontiert werden kann. Die Rastausnehmungen, in die die Rasthaken einfedern, können als Durchbrüche im Zahnbürstengehäuse ausgebildet sein.

Um eine genaue Positionierung und spielfreie Festlegung des Chassis mit dem daran befestigen Motor relativ zum Gehäuse zu erreichen, kann zwischen dem Chassis und dem Zahnbürstengehäuse ein Federelement angeordnet sein, das bei dem axialen Einschieben des Chassis elastisch verformt wird und eine axiale Vorspannung zwischen Chassis und Zahnbürstengehäuse bewirkt. Die Verrastung wird hierdurch in eine definierte Lage vorgespannt, auch wenn die Rastausnehmung größer ist als der Rasthaken. Zudem können Toleranzen ausgeglichen werden. Die Verrastung liegt durch die Federkraft stets an der hinterschnittenen Flanke des Rasthakens an.

Grundsätzlich könnte ein separates Federelement zwischen das Chassis und das Zahnbürstengehäuse geschoben werden. In Weiterbildung der Erfindung jedoch ist das Federelement integral am Chassis und/oder am Zahnbürstengehäuseabschnitt angeformt. Insbesondere können am Chassis Federbügel vorgesehen sein, die nach Art einer Blattfeder gegen entsprechende Gegenflächen am Zahnbürstengehäuse anlaufen und dabei elastisch verformt werden, wenn das Chassis in das Zahnbürstengehäuse eingeschoben wird. Vorzugsweise liegen die Federbügel am in Einschubrichtung des Chassis vorderen Ende desselben.

Um ein verkehrtes Einschieben des Chassis in das Gehäuse zu verhindern, ist vorzugsweise eine Einschiebecodierung vorgesehen, die ein Einschieben des Chassis in nur einer Ausrichtung erlaubt. Insbesondere kann eine Drehcodierung vorgesehen sein, die eine verdrehte Montage des Chassis verhindert. Hierdurch kann erreicht werden, dass die Antriebspatrone stets so in das Gehäuse eingeschoben wird, dass die Schaltereinheit unter einer dafür im Gehäuse vorgesehenen Ausnehmung bzw. einem entsprechendem Softkunststoffabschnitt zu liegen kommt.

In Weiterbildung der Erfindung ist eine Einschiebeführung insbesondere in Form von Längsrippen an dem Chassis und/oder dem Zahnbürstengehäuseabschnitt vorgesehen. Die Einschiebeführung bewirkt zum einen ein Einschieben in der gewünschten Ausrichtung. Zum anderen bildet sie eine Verdrehsicherung, die die bei Betrieb des Motors auftretenden Reaktionskräfte aufnimmt. Auf die Verrastung zwischen Chassis und Zahnbürstengehäuse wirken lediglich Achsialkräfte.

Um das Zahnbürstengehäuse mit der darin eingeschobenen Antriebspatrone zu verschliessen, kann eine Gehäusekappe auf die Zahnbürstengehäuseöffnung gesetzt, insbesondere formschlüssig gesichert werden. Die Gehäusekappe verschließt dabei vorzugsweise ein am Chassis vorgesehenes Batterieaufnahmefach, so dass nach Lösen der Gehäusekappe die Batterie im Batterieaufnahmefach ausgetauscht werden kann.

Der Bürstenkopf der Zahnbürste kann an verschiedene Putzwünsche oder -bedingungen oder -bewegungen angepasst sein. Gemäß einer Ausführung der Erfindung kann der Bürstenkopf allein ein bewegliches, auf dem angetriebenen Borstenträger angeordnetes Borstenfeld besitzen.

Gemäß einer alternativen Ausführung der Erfindung besitzt der Bürstenkopf zumindest ein feststehendes Borstenfeld sowie ein bewegliches, auf dem Borstenträger angeordnetes Borstenfeld. Mit dem feststehenden Borstenfeld wird wie mit einer herkömmlichen händischen Zahnbürste geputzt, während das bewegliche Borstenfeld eine zusätzlich motorisch bedingte Reinigungswirkung herbeiführt.

Das bewegliche Borstenfeld kann eine in etwa kreisförmige Kontur aufweisen und rotatorisch oszillierend um den Kreismittelpunkt antreibbar sein. Die Anordnung des beweglichen Borstenfelds relativ zum feststehenden Borstenfeld kann verschieden sein. So kann das bewegliche Borstenfeld zwischen zwei feststehenden Borstenfeldern angeordnet sein. Gemäß einer bevorzugten Ausführung der Erfindung ist das rotatorisch antreibbare, bewegliche Borstenfeld an einem stirnseitigen Ende des Bürstenkopfs angeordnet, während sich das feststehende Borstenfeld zu nur einer zum Handgriff weisenden Seite des beweglichen Borstenfelds an dieses anschließt.

Weitere Ziele, Vorteile, Merkmale und Anwendungsmöglichkeiten der vorliegenden Erfindung ergeben sich aus der nachfolgenden Beschreibung bevorzugter Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehungen. In den Zeichnungen zeigen:
- Figur 1: eine perspektivische Ansicht einer erfindungsgemäßen elektrischen Zahnbürste mit einem rotatorisch antreibbaren Borstenfeld und einem feststehenden Borstenfeld,
- Figur 2: einen Längsschnitt durch die Zahnbürste aus Figur 1,
- Figur 3: einen Längsschnitt durch die Zahnbürste aus Figur 1, der gegenüber dem Längsschnitt von Figur 2 um 90° gedreht ist und der Längssymmetrieebene der Zahnbürste entspricht,
- Figur 4: eine schematische, perspektivische und vergrößerte Darstellung des Antriebs des bewegbaren Borstenträgers der Zahnbürste aus den vorhergehenden Figuren, die die Lagerung einer Antriebswippe zwischen dem Borstenträger und dem Motor zeigt,
- Figur 5: eine schematische Darstellung der geometrischen und kinematischen Verhältnisse des Antriebsstrangs, die die doppelkegelförmige Antriebsbewegung des Übertragers zwischen dem Motor und dem Borstenträger verdeutlicht,
- Figur 6: eine ausschnittsweise vergrößerte Darstellung des Borstenträgers, die die Verbindung des Borstenträgers mit dem Übertrager zeigt, nach einer ersten Ausführung der Erfindung,
- Figur 7: eine vergrößerte, ausschnittsweise Darstellung des Borstenträgers, die die Verbindung des Borstenträgers mit dem Übertrager zeigt, nach einer alternativen Ausführung der Erfindung,
- Figur 8: eine teilweise Exposionsdarstellung der Zahnbürste aus Figur 1, die ein in das Zahnbürstengehäuse einsetzbares Chassis mit daran gelagertem Motor, einer Schalteinheit sowie einem Batterieaufnahmefach vor dem Zusammenbau zeigt,
- Figur 9: eine Exposionsdarstellung der Zahnbürste aus Figur 1 ähnlich der Figur 8, wobei das Gehäuse und das Chassis in einer Seitenansicht gezeigt sind,
- Figur 10: eine ausschnittsweise Längsschnittansicht der Zahnbürste aus den vorhergehenden Figuren, die die Anordnung des motortragenden Chassiss im Inneren des Zahnbürstengehäuses nach dem Zusammenbau zeigt,
- Figur 11: eine ausschnittsweise Seitenansicht der Zahnbürste aus den vorhergehenden Figuren mit abgeschraubtem Batteriefachdeckel, die die Verriegelung zwischen dem motortragenden Chassis und dem Zahnbürstengehäuse mittels Rastnasen zeigt, und
- Figur 12: einen Querschnitt entlang der Linie A-A in Figur 10.

Die in den Figuren gezeigte elektrische Zahnbürste besitzt einen Handteil 1 und einen Bürstenkopf 2, der mit dem Handteil 1 durch ein Bürstenrohr 3 verbunden ist. In dem Handteil 1 sind hintereinander ein Batterieaufnahmefach 5 sowie zum Bürstenrohr 3 hin ein Elektromotor 4 angeordnet, der im Inneren des Gehäuses 6 der Zahnbürste liegt. Durch ein am Gehäuse 6 angeordnetes Schaltelement 7 ist der Motor 4 ein- und ausschaltbar.

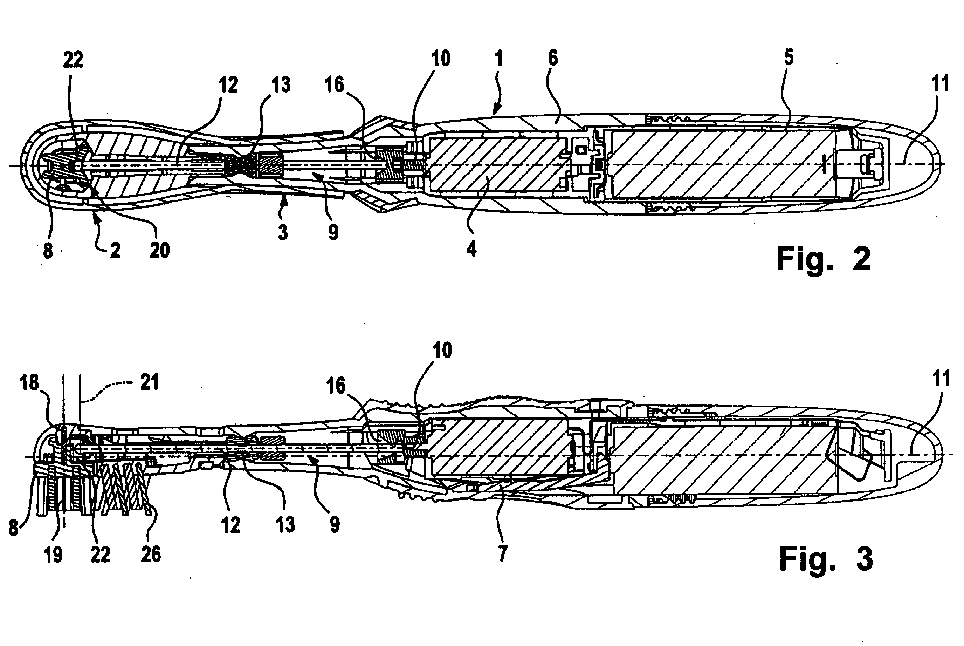

Am Bürstenkopf 2 ist ein Borstenträger 8 beweglich gelagert bzw. geführt, wie noch näher erläutert werden wird. Mittels eines Übertragers 9, der im Inneren des Bürstenrohrs 3 angeordnet ist, wird der Borstenträger 8 vom Motor 4 her angetrieben (vgl. Figuren 2 und 3).

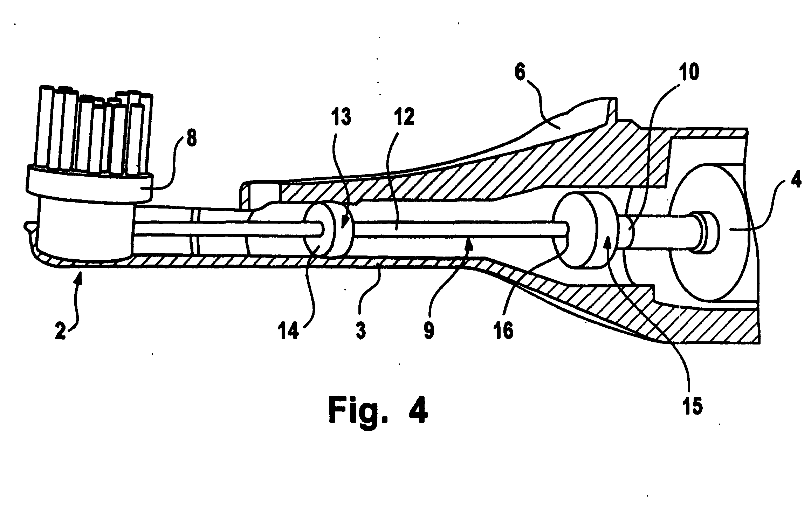

Der Motor 4 ist mit seiner Motorwelle 10 in Längsrichtung 11 der Zahnbürste im Inneren des Gehäuses 6 angeordnet. Als Übertrager ist eine Antriebswippe 12 vorgesehen, die in der gezeigten Ausführung als starrer Metallstab ausgebildet ist. Die Antriebswippe 12 ist zwischen dem Motor 4 und dem Borstenträger 8 mehrachsig wippbar gelagert. Wie Figur 4 zeigt, ist ein hülsen- bzw. ringförmiges Lagerelement 13 vorgesehen, das die Antriebswippe 12 ringförmig umschließt. Die ringförmige Festlegung der Antriebswippe lässt eine mehrachsige Bewegung der Antriebswippe zu, und zwar jeweils um Schwenkachsen, die in einer Ebene senkrecht zur Längsrichtung der Zahnbürste liegen.

Um die Hebelverhältnisse der Antriebswippe einstellen zu können, kann das Lagerelement 13 im Bürstenrohr in Längsrichtung 11 verstellbar, insbesondere verschieblich gelagert sein. Die Figuren 2 und 3 zeigen indes eine Ausführung, bei der das Lagerelement 13 ortsfest im Bürstenrohr nach Art eines Stopfens steckt. Um eine Verschieblichkeit des Lagerelements zu gestatten, kann durch eine nicht näher dargestellte Aussparung im Bürstenrohr das Lagerelement 13 mit einem Bedienelement hindurchtreten, mit Hilfe dessen das Lagerelement 13 längs verschoben werden könnte. Das Lagerelement 13 weist einen die Antriebswippe 12 umgreifenden Ring aus elastischem Material auf, der die Antriebswippe dichtend umschließt. Nach außen hin ist der Ring bzw. das Lagerelement 13 ebenfalls abdichtend am Gehäuse 6 angeordnet bzw. geführt, so dass das Innere des Gehäuses 6, in dem der Motor 4 angeordnet ist, zum Bürstenkopf 2 hin abgedichtet ist. Der Motor 4 ist dadurch vor in das Gehäuse eindringendem Wasser geschützt.

Mit dem Motor 4 ist die Antriebswippe 12 durch einen Exzenter 15 gekoppelt. Der Exzenter 15 ist als Hülse ausgebildet und sitzt drehfest auf der Motorwelle 10. Wie Figur 4 verdeutlicht, ist in dem Exzenter 15 eine zur Motorwelle 10 exzentrisch angeordnete Ausnehmung 16 vorgesehen, in der das motorseitige Ende der Antriebswippe 12 sitzt und die Ausnehmung 16 ist dabei derart ausgebildet, dass die Antriebswippe 12 Kippbewegungen relativ zum Exzenter 15 ausführen kann. Wie die Figuren 2 und 3 zeigen, ist die Ausnehmung 16 zur Antriebswippe 12 hin sich trichterförmig erweiternd ausgebildet, um den beim Umlaufen auftretenden Winkelversatz zuzulassen. Insbesondere kann der Motorexzenter eine Bohrung mit entsprechender starker Phase bzw. einem ausreichenden Radius exzentrisch zur Motorachse 10 aufweisen. Die Antriebswippe 12 sitzt also kugelgelenkartig auf dem Exzenter 15.

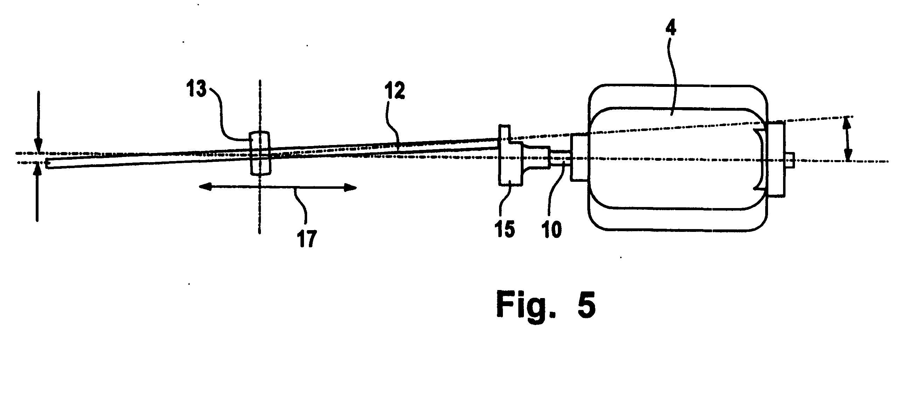

Die durch die gelenkige Verbindung mit dem Exzenter 15 entstehende Antriebsbewegung der Antriebswippe 12 verdeutlicht Figur 5. Das motorseitige Ende der Antriebswippe 12 führt entsprechend der Bewegung der Ausnehmung 16 des Exzenters 15 eine kreisbahnförmige Bewegung um die Motorachse herum aus. Die Lagerung der Antriebswippe 12 zwischen Motor und Borstenträger mittels des Lagerelements 13 fixiert die Antriebswippe 12 punktförmig, so dass die Antriebsbewegung der Antriebswippe 12 einen Doppelkegel beschreibt, wobei die Spitzen der beiden zusammenlaufenden Kegel im Bereich des Lagerelements 13 liegen. Durch Längsverschiebung des Lagerelements 13 in Richtung der Motorachse, was durch den Pfeil 17 in Figur 5 verdeutlicht ist, können die Hebelverhältnisse dadurch verändert werden. Entsprechend der Stellung des Lagerelements 13 kann das borstenträgerseitige Ende der Antriebswippe 12 eine Kreisbahn beschreiben, die im Durchmesser kleiner, größer oder gleich der Kreisbahn ist, die das motorseitige Ende der Antriebswippe beschreibt.

Der Borstenträger 8 ist unabhängig von der Antriebswippe 12 am Bürstenkopfstück des Gehäuses gelagert. Wie die Figur 3 zeigt, ist der Borstenträger 8 um eine Borstenträgerdrehachse 18 drehbar gelagert, was gemäß Figur 3 durch einen im Bürstenkopf verankerten Lagerstift realisiert ist, auf dem der Borstenträger 8 sitzt. Die Borstenträgerdrehachse 18 kann grundsätzlich unterschiedlich geneigt sein. Sie erstreckt sich vorzugsweise quer zur Längsachse der Zahnbürste. In der gezeichneten Ausführung steht sie senkrecht zur Längsachse 11 der Zahnbürste und geht zentrisch durch den Borstenträger hindurch, so dass sie etwa die Symmetrieachse des kreisförmigen Borstenfeldes 19 bildet.

Um die Antriebsbewegung der Antriebswippe 12 in die gewünschte Antriebsbewegung des Borstenträgers 8 umzuwandeln, ist zwischen dem Borstenträger 8 und der Antriebswippe 12 eine gelenkige Verbindung vorgesehen, die in den Figuren mit der Bezugsziffer 20 gekennzeichnet ist. Die Verbindung 20 besitzt mehrerer Freiheitsgrade. Zum einen gestattet sie eine Kippbewegung zwischen dem Borstenträger 8 und der Antriebswippe 12 um eine zur Borstenträger-Drehachse 18 parallele Gelenkachse 21. Zum anderen gestattet sie translatorische Bewegungen zwischen dem Bürstenträger 8 und dem Ende der Antriebswippe 12 entlang der Gelenkachse 21. Darüber hinaus gestattet die Verbindung Ausgleichsbewegungen zwischen dem Borstenträger 8 und der Antriebswippe 12 in Längsrichtung der Antriebswippe 12, d.h. die Antriebswippe 12 kann aus dem Borstenträger in Längsrichtung herausgezogen werden.

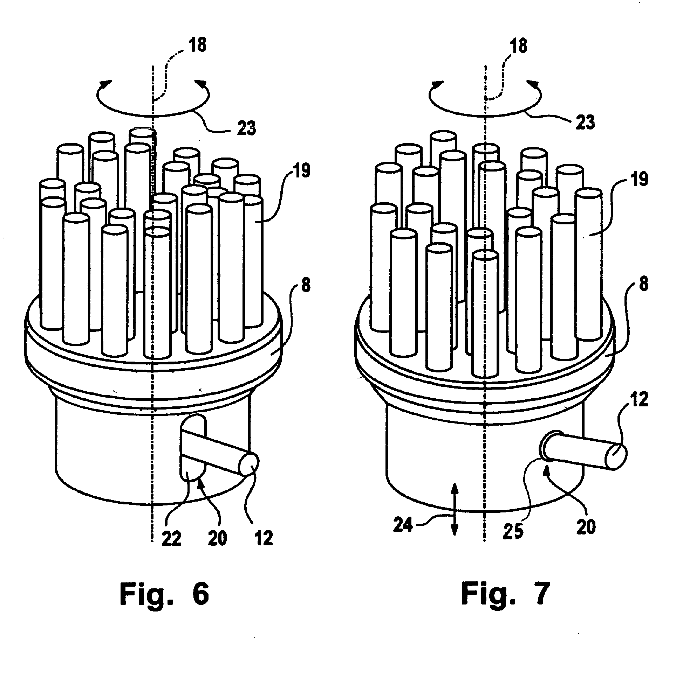

Wie die Figuren 2 und 3 zeigen, ist das borstenträgerseitige Ende der Antriebswippe 12 kugelkalottenförmig abgerundet bzw. ausgebildet. In dem Borstenträger 8 ist zur Aufnahme der Antriebswippe ein sich parallel zur Borstenträger-Drehachse 18 erstreckender Aufnahmeschlitz 22 vorgesehen, der in einer Mantelfläche des Borstenträgers 8 ausgebildet ist. Wie Figur 2 zeigt, besitzt der Aufnahmeschlitz 22 rechts und links Einfuhrschrägen, die ein Einführen des Endes der Antriebswippe 12 erleichtert. Andererseits gestattet die sich zur Antriebswippe 12 hin erweiternde Gestalt des Schlitzes in Verbindung mit dem kugelkalottenförmigen Ende der Antriebswippe die gelenkige Bewegung zwischen diesen beiden Bauteilen um die Gelenkachse 21 (vgl. Figur 3). Dadurch, dass die Antriebswippe 12 in dem langlochartigen Schlitz 22 in dem Borstenträger auf- und abrutschen kann, wird nur die Komponente der Kegelbewegung quer zur Borstenträger-Drehachse 8 übertragen. Der gemäß Figur 3 vertikale Anteil der Kegelbewegung wird durch die schlitzförmige bzw. langlochartige Aufnahme 22 ausgeglichen. Die Antriebswippe geht parallel zur Drehachse des Borstenträgers leer um. Dies verdeutlicht insbesondere Figur 6.

Eine alternative Verbindung zwischen dem Borstenträger und der Antriebswippe 12 zeigt Figur 7. Hier ist eine kugelgelenkartige Verbindung vorgesehen, die die Antriebsbewegung der Antriebswippe sowohl quer zur Borstenträger-Drehachse 18 als auch parallel zur Borstenträger-Drehachse 18 überträgt. Wie Figur 7 zeigt, sitzt das borstenträgerseitige Ende der Antriebswippe 12 in einer Aufnahmebohrung 25 im Borstenträger 8, die sich zur Antriebswippe 12 hin trichterförmig erweitert bzw. angefast oder abgerundet ist, um den entsprechenden Winkelversatz zwischen dem Borstenträger 8 und der Antriebswippe zuzulassen. Die Antriebswippe 12 ist an ihrem Ende ebenfalls vorzugsweise kugelkalottenförmig ausgebildet, wie bei der zuvor beschriebenen Ausführung.

Im Gegensatz zur zuvor beschriebenen Ausführung ist der Borstenträger 8 nicht nur um die Drehachse 18 drehbar gelagert, sondern auch entlang der Drehachse 18 verschieblich gelagert, so dass der Borstenträger 8 bzw. das darauf angeordnete Borstenfeld nicht nur oszillierende Rotationsbewegungen um die Drehachse 8, sondern auch Stocherbewegungen ausführen kann, was in Figur 7 die Pfeile 23 und 24 verdeutlichen. Ansonsten entspricht die Lagerung des Bürstenträgers 8 der zuvor beschriebenen.

Wird die Aufnahmebohrung 25 in vertikaler Richtung, andererseits in Richtung der Borstenträger-Drehachse 18 leicht oval gestaltet, so wird bei voller Oszillation nur ein entsprechend anteiliger Hub übertragen. Gegebenenfalls kann auch die rotatorisch oszillierende Bewegung eingeschränkt werden. Hierzu müsste eine sich in horizontaler Richtung leicht oval erstreckende Bohrung vorgesehen werden. Durch die Ausrichtung und Gestaltung der Ausnehmung im Borstenträger, in der die Antriebswippe sitzt, kann die Bewegung bzw. die Umsetzung der Antriebsbewegung gesteuert werden.

Durch die beschrieben doppelkegelförmige Antriebsbewegung des Übertragers können beträchtliche Vorteile erreicht werden. Es kann ein einfacher Motorexzenter ohne zusätzlichen Stahlstift oder ähnliches Verwendung finden, wobei der Übertrager in einer einfachen Ausnehmung im Motorexzenter sitzt. Der Übertrager kann ein einfacher gerader Stab beispielsweise in Form eines Drahtes sein. Durch den geraden Übertrager kann die Montage einfach gehalten werden. Längentoleranzen des Gehäuses werden durch entsprechende Geometrie im Motorexzenter und im Abtriebseingriff ausgeglichen. Toleranzen von bis zu 2,5 mm sind problemlos kompensierbar. Trotz einer einfachen Lagerung des Übertragers kann eine Oszillationsbewegung des Borstenträgers um dessen Drehachse mit einer Hubbewegung überlagert werden, so dass auch ein stocherndes Putzen der Zähne bewirkt wird. Durch Veränderung des Lagerpunkts der Übertragerwippe kann zudem der Oszillationswinkel verstellt werden.

Wie Figur 3 zeigt, ist der Borstenträger 8 bei rotatorischem Antrieb vorzugsweise mit kreisrunder Kontur ausgebildet. Die darauf angeordneten Borstenbüschel können in verschiedener Neigung angeordnet sein. Gemäß Figur 3 sind die radial äußeren Borstenbüschel leicht konisch nach aussen angestellt, während die inneren Borstenbüschel etwa parallel zur Drehachse des Borstenträgers angeordnet sind.

Das bewegliche Borstenfeld 19 sitzt gemäß Figur 7 am stirnseitigen Ende der Zahnbürste. Zum Bürstenrohr 3 hin schließt ein feststehendes Borstenfeld 26 an, dessen Borstenbüschel starr am Bürstenkopf 2 befestigt sind. Die Borstenbüschel können unterschiedlich angeordnet sein. Gemäß Figur 3 sind sie in Längsrichtung der Zahnbürste gegensinnig geneigt. Vorzugsweise können auch von den freien Enden der Borstenbüschel unterschiedliche Höhen definiert werden, wie dies auch beim beweglichen Borstenfeld der Fall ist.

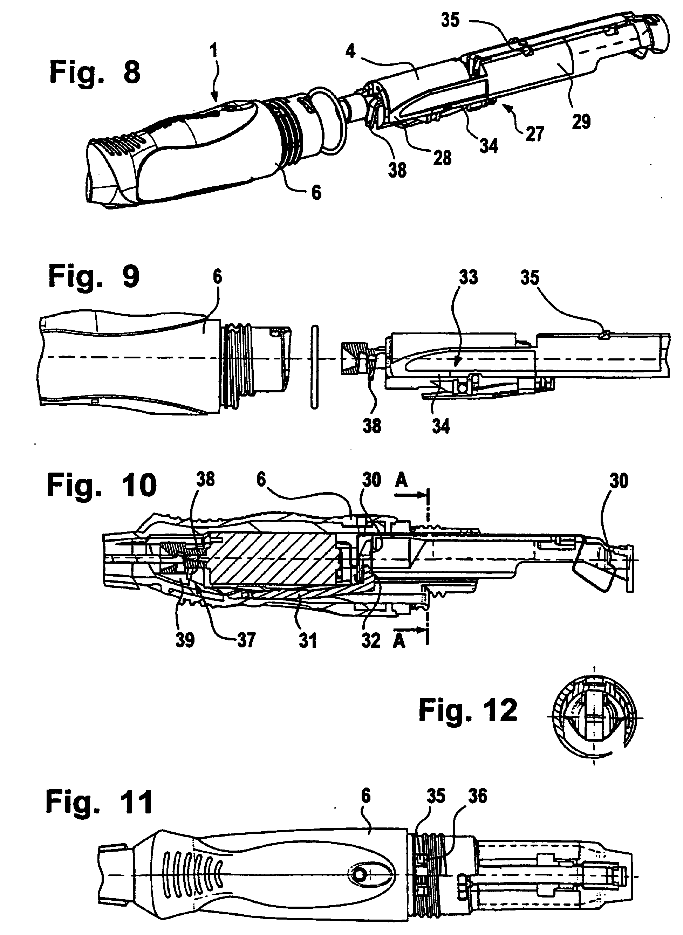

Zur Lagerung des Elektromotors 4 im Inneren des Zahnbürstengehäuses 6 ist ein Chassis 27 vorgesehen, das den Elektromotor 4 trägt und an dem Zahnbürstengehäuse 6 verankert ist. Sowohl das Zahnbürstengehäuse 6 wie auch das Chassis 27 sind jeweils als Kunststoff-Spritzgussteile ausgebildet und besitzen beide eine längliche Gestalt mit - grob gesprochen - etwa kreisrunder Querschnittskontur. Wie Figur 8 zeigt, besitzt das Chassis 27 einen Motorbefestigungsabschnitt 28, der als Fach ausgebildet ist, in das der etwa zylindrische Elektromotor passgenau eingelegt werden kann. Axial hinter dem Motorbefestigungsabschnitt 28 bildet das Chassis 27 ein Batterieaufnahmefach 29 aus, in dem eine Batterie oder dergleichen eingelegt werden kann, so dass sie stirnseitig hinter dem Motor 4 liegt. An den axialen Enden des Batterieaufnahmefachs 29 sind an dem Chassis 27 elektrische Kontakte 30 vorgesehen, die federnd ausgebildet sind.

Um den Elektromotor 4 ein- und ausschalten zu können, ist ein Unterbrecherelement 31 vorgesehen, das ebenfalls am Chassis 27 befestigt ist. Wie die Figuren 9 und 10 zeigen, ist das Unterbrecherelement 31 als Wipptaste ausgebildet, die einen hakenförmigen Unterbrechervorsprung 32 besitzt. Bei entsprechender Betätigung trennt das Unterbrecherelement 31 eine in das Batterieaufnahmefach 21 eingelegt Batterie von einem der elektrischen Kontakte 30. In der gezeichneten Ausführungsform bewirkt die Betätigung des Unterbrecherelements 31 ein Nach-Hinten-, d.h. gemäß Figur 10 Nach-Rechts-Schieben der Batterie, so dass sie vom vorderen elektrischen Kontakt abgehoben wird. Das Batterieaufnahmefach 29 ist entsprechend lang ausgebildet, um die Trennbewegung der Batterie zu gestatten. Die Unterbrecherwippe 31 erstreckt sich in axialer Richtung und ist derart angeordnet, dass sie unter einer Betätigungsausnehmung im Zahnbürstengehäuse zu liegen kommt. Die Betätigungsausnehmung ist mittels einer Softkunststoffmembran verschlossen, die die Betätigungsöffnung des Gehäuses abdichtet und durch elastische Verformung eine Betätigung des Unterbrecherelements 31 gestattet (vgl. Figur 10). Die Unterbrecherwippe bleibt in der die Batterie vom entsprechenden Kontakt trennenden Stellung selbsthemmend stehen. Die Anordnung ist derart getroffen, daß durch die Betätigungsausnehmung im Gehäuse hindurch die Unterbrecherwippe vor und hinter ihrer Lagerstelle gedrückt werden kann, um sie in beide Schaltrichtungen durch einfachen Daumendruck betätigen zu können.

Das Chassis 27, das mit dem daran befestigten Elektromotor 4, der in das Batterieaufnahmefach 29 eingelegten Batterie, den elektrischen Kontakten und der Schalteinheit in Form des Unterbrecherelements 31 eine vormontierte Antriebseinheit in Form einer Antriebspatrone bildet, kann in besonders einfacher Weise durch eine geradlinige Bewegung von hinten in das Zahnbürstengehäuse 6 eingeschoben werden. Das Zahnbürstengehäuse 6 besitzt eine stirn- bzw. endseitige Öffnung 33, durch die die vormontierte Antriebspatrone von hinten her einschiebbar ist.

Um ein passgenaues Einschieben in der gewünschten Ausrichtung sicherzustellen, ist zwischen dem Gehäuse 6 und dem Chassis 27 eine Einschiebeführung 33 vorgesehen. Wie Figur 9 zeigt, sind an einer Mantelfläche des Chassiss 27 sich axial erstreckende Führungsrippen 34 vorgesehen, die etwa diametral gegenüberliegend angeordnet sind und radial am Chassis 27 vorspringen. Komplementär zu diesen Rippen 34 sind an der Innenwandung des Gehäuses 6 Einschiebenuten bzw. Einschiebvorsprünge vorgesehen, in die bzw. zwischen die die Führungsrippen 34 am Chassis 27 einschiebbar sind. Werden die Führungsrippen 34 nicht zwischen die komplementären Nuten bzw. Vorsprünge am Gehäuse 6 eingeführt, blokkieren sie das Einschieben. Sie bilden daher eine Codierung, die sicherstellt, dass das Chassis 27 nur in der richtigen Drehlage in das Gehäuse eingeschoben werden kann. Gleichzeitig sichern sie das Chassis mit dem daran gelagerten Motor sowie der Schalteinheit gegen Verdrehen im Gehäuse.

Das Chassis 27 mit den daran gelagerten Antriebselementen wird ohne separate Befestigungsmittel am Gehäuse 6 formschlüssig verriegelt. Zwischen dem Gehäuse 6 und dem Chassis 27 ist eine Verrastung vorgesehen. Wie die Figuren 8 und 9 zeigen, sind an einer Mantelfläche des Chassis 27 radial nach aussen vorspringende Rasthaken 35 vorgesehen, die beim Einschieben des Chassiss 27 an einer Gehäusewandung auflaufen. Wird das Chassis 27 weiter eingeschoben, federn die Rasthaken 35 radial nach innen oder es federt die entsprechende Gehäusewandung des Gehäuses 6 radial nach aussen. Ist das Chassis 27 in die Sollposition geschoben, verrasten die Rasthaken 35 mit komplementären Hinterschneidungen bzw. Rastausnehmungen 36 in der Gehäusewandung. Wie Figur 11 zeigt, sind in der Gehäusewandung zwei Durchbrüche vorgesehen, die die Rastausnehmungen 36 bilden. Um ein einfaches Einschnappen zu erreichen, sind die Rastausnehmungen 36 etwas größer ausgebildet als die Rasthaken 35, so dass letztere einfach einschnappen. Um dennoch eine exakte Positionierung und auch einen Toleranzenausgleich zu erreichen, wird das Chassis 27 in seine Sollposition vorgespannt. Mittels einer in axialer Richtung wirksamen Federeinrichtung 37 wird das Chassis 27 nach hinten, d.h. aus dem Chassis herausgedrückt. Selbstverständlich wird das Chassis 27 nicht tatsächlich herausgedrückt, sondern mit den Rasthaken 35 gegen die entsprechenden Anschlagflächen der Rastausnehmungen 36 gedrückt, so dass das Chassis 27 immer in einer definierten Stellung liegt. Die Sollstellung wird durch die Verriegelungsflanken der Rasthaken 35 gebildet. Die Federeinrichtung 37 ist in der gezeichneten Ausführung integral einstückig an das Chassis 27 angespritzt. An dessen vorderen Stirnseite sind zwei bügelförmige Fedemasen 38 (vgl. Figuren 8 und 9) angeformt, die in axialer Richtung elastisch ausgebildet sind. Im Inneren des Gehäuses 6 sind Anschläge 39 vorgesehen, gegen die die Fedemasen 38 drücken, wenn das Chassis 27 vollständig in das Gehäuse 6 eingeschoben wird. Hierdurch werden die Fedemasen 38 elastisch verformt, so dass sie die gewünschte Vorspannung des Chassiss 27 in die Sollposition bewirken.

Gleichzeitig beim Einschieben des Chassiss 27 oder im Anschluss daran wird der Übertragerstab 9 mit dem auf der Motorwelle 10 aufgepressten Exzenter 15 gekuppelt. Hierbei ist hilfreich, dass sich die Ausnehmung 16, in der der Übertragerstab 9 sitzt, zum Übertrager 9 hin trichterförmig erweitert (vgl. Figur 10). Dies erleichtert das Einfädeln des Übertragers 9 in die Ausnehmung 16.

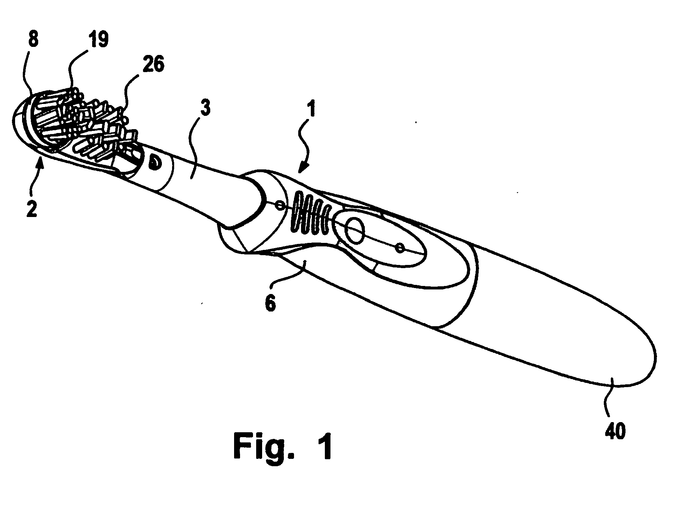

Wie Figur 11 zeigt, steht das Chassis 27 im montierten Zustand mit dem Batterieaufnahmefach 29 nach hinten aus dem vorderen Gehäuseteil heraus. Der Handteil besteht aus zwei Gehäuseteilen. Der Gehäuseabschnitt, in den das Chassis 27 eingeschoben wird und an dem es verriegelt ist, wird mittels einer Gehäusekappe 40 verschlossen, die über dem herausstehenden Teil des Chassis 27 geschoben wird und mit dem vorderen Gehäuseabschnitt verschraubt wird (vgl. Figur 1).

## Patentansprüche

1. Elektrische Zahnbürste mit einem Handteil (1), einem Borstenträger (8), der an einem Kopfabschnitt (2) des Handteils (1) um eine Borstenträgerdrehachse (18) drehbar gelagert ist, sowie einem Antrieb (4, 9) für den Borstenträger, wobei der Antrieb einem am Handteil angeordneten Motor (4) sowie einem Übertrager (9) aufweist, der eine Antriebsbewegung des Motors auf den Borstenträger überträgt wobei als Übertrager (9) eine Antriebswippe (12) vorgesehen ist, die mehrachsig wippbar gelagert ist, **dadurch gekennzeichnet, dass** die Antriebswieppe (12) vom Motor derart antreibbar ist, dass sie eine etwa doppelkegelförmige Umlaufbewegung ausführt, und dass die Verbindung (20) zwischen der Antriebswippe(12) und dem Borstenträger (8) um eine zur Borstenträger-Drehachse (18) parallele Gelenkachse (21) gelenkig ausgebildet ist.

2. Zahnbürste nach dem vorhergehenden Anspruch, wobei die gelenkige Verbindung (20) zwischen dem Borstenträger (8) und dem Übertrager (9) neben ihrer Gelenkigkeit um die Gelenkachse (21) einen weiteren Freiheitsgrad aufweist, insbesondere eine translatorische Bewegung zwischen der Antriebswippe und dem Borstenträger in Richtung der Gelenkachse (21) zulässt, wobei vorzugsweise die Antriebswippe (12) in einer längsschlitzförmigen Ausnehmung (22) im Borstenträger (8) sitzt.

3. Zahnbürste nach einem der vorhergehenden Ansprüche, wobei der Borstenträger (8) entlang der Borstenträger-Drehachse (18) verschieblich am Handteil (1) gelagert ist und die gelenkige Verbindung (20) zwischen dem Borstenträger (8) und der Antriebswippe (12) in Richtung der Gelenkachse (21) wirksame Übertragungsmittel aufweist, die Bewegungen der Antriebswippe (12) in Richtung der Gelenkachse (21) auf den Borstenträger (8) zumindest teilweise übertragen, wobei vorzugsweise die Antriebswippe (12) in einer Ausnehmung (22, 25) sitzt, deren Längserstreckung in Richtung der Gelenkachse (21) kleiner ist als die Amplitude der Bewegung der Antriebswippe in Richtung der Gelenkachse.

4. Zahnbürste nach einem der vorhergehenden Ansprüche, wobei der Borstenträger (8) in Richtung der Gelenkachse (21) im wesentlichen spielfrei auf der Antriebswippe (12) sitzt.

5. Zahnbürste nach einem der vorhergehenden Ansprüche, wobei der Übertrager (9) mit seinem dem Motor zugewandten Ende über einen Exzentermechanismus mit dem Motor (4) gekoppelt, vorzugsweise unmittelbar an einem drehfest auf der Motorwelle (10) sitzenden Exzenter (15) gelenkig angelenkt ist, so dass das motorseitige Ende des Übertragers (9) auf einer Kreisbahn antreibbar ist.

6. Zahnbürste nach einem der vorhergehenden Ansprüche, wobei zur Lagerung des Übertragers (9) zwischen Motor und Borstenträger ein in Längsrichtung der Zahnbürste verstellbares Lagerelement (13), vorzugsweise ein längsverschieblicher Lagerring, vorgesehen ist.

7. Zahnbürste nach einem der vorhergehenden Ansprüche, wobei eine Dichtung (14) zur Abdichtung des Übertragers (9) gegenüber einem Zahnbürstengehäuse (6) vorgesehen, insbesondere von der Übertragerlagerung gebildet ist.

8. Zahnbürste nach einem der vorhergehenden Ansprüche, wobei der Übertrager (9) ein einstückiger, starrer Stab ist, vorzugsweise als einfacher, gerader Draht frei von Winkstücken, Abkröpfungen und dergleichen ausgebildet ist.

9. Zahnbürste nach einem der vorhergehenden Ansprüche, wobei der Motor (4) mit seiner Antriebswelle (10) in Längsrichtung der Zahnbürste ausgerichtet im Inneren des Handteils (1) gelagert ist.

10. Elektrische Zahnbürste nach einem der vorhergehenden Ansprüche, wobei ein motortragendes Chassis (27) vorgesehen ist, das zur Motorlagerung im Inneren eines Zahnbürstengehäuseabschnitts (6) an diesem befestigbar ist, wobei das Chassis (27) mitsamt dem daran befestigten Motor (4) durch eine stirnseitige Öffnung des Zahnbürstengehäuseabschnitts in Längsrichtung der Zahnbürste in den Zahnbürstengehäuseabschnitt einschiebbar und an diesem ortsfest verrastbar ist.

11. Zahnbürste nach dem vorhergehenden Anspruch 10 wobei das Chassis durch die geradlinige Einschubbewegung des Chassis automatisch am Zahnbürstengehäuse verrastet.

12. Zahnbürste nach einem der vorhergehenden Ansprüche 10 oder 11, wobei das Chassis eine Batterieaufnahme (29) aufweist und eine Schalteinheit (31) trägt und das Chassis mitsamt Motor, Batterie und Schalteinheit als vormontierte Einheit in den Zahnbürsten-gehäuseabschnitt (6) einschiebbar ist.

13. Zahnbürste nach einem der vorhergehenden Ansprüche 10 bis 12, wobei als Schalteinheit eine am Chassis (27) beweglich gelagerte Unterbrechertaste (31) vorgesehen ist, durch deren Betätigung eine im Batteriefach angeordnete Batterie von einem Batteriekontakt (30) trennbar ist.

14. Zahnbürste nach einem der vorhergehenden Ansprüche 10 bis 13, wobei an dem Chassis (27) und/oder an dem Zahnbürstengehäuseabschnitt (6) eine Drehcodierung (34) vorgesehen ist, die ein Einschieben des Chassis in nur einer Drehstellung relativ zum Zahnbürstengehäuseabschnitt erlaubt.

15. Zahnbürste nach einem der vorhergehenden Ansprüche 10 bis 14, wobei eine Einschiebeführung (33) insbesondere in Form von Längsrippen (34) an dem Chassis (27) und/oder dem Zahnbürstengehäuseabschnitt (6) vorgesehen ist.

16. Zahnbürste nach einem der vorhergehenden Ansprüche 10 bis 15, wobei auf die Zahnbürstengehäuseöffnung, durch die das Chassis (27) einschiebbar ist, eine Gehäusekappe (40) aufsetzbar, insbesondere aufschraubbar ist, wobei die Gehäusekappe (40) vorzugsweise die Batterieaufnahme des Chassis (27) verschließt.

17. Zahnbürste nach einem der vorhergehenden Ansprüche, wobei allein ein auf dem Borstenträger (8) angeordnetes, bewegliches Borstenfeld vorgesehen ist.

18. Zahnbürste nach einem der vorhergehenden Ansprüche, wobei der Bürstenkopf zumindest ein feststehendes Borstenfeld (26) sowie ein bewegliches, auf dem Borstenträger (8) angeordnetes Borstenfeld (19) aufweist.

19. Zahnbürste nach einem der vorhergehenden Ansprüche, wobei das bewegliche Borstenfeld in etwa kreisförmige Kontur aufweist, rotatorisch oszillierend antreibbar und/oder an einem stirnseitigen Ende des Bürstenkopfs (2) angeordnet ist.

## Claims

1. An electric toothbrush comprising a handpiece (1), a bristle holder (8) which is mounted on a head portion (2) of the handpiece (1) so that it can rotate about an axis of rotation (18) of the bristle holder, and comprising a drive (4, 9) for the bristle holder, wherein the drive has a motor (4) arranged on the handpiece and a transmission member (9) which transfers a driving motion from the motor to the bristle holder, wherein a drive rocker (12) provided as transmission member (9) is arranged to rock in multiple axes, **characterised in that** the drive rocker (12) is driven by the motor such that it executes an approximately double-conical rotational movement and that the connection (20) between the drive rocker (12) and the bristle holder (8) is embodied in an articulated manner about an axis of articulation (21) that is parallel to the axis of rotation (18) of the bristle holder.

2. The toothbrush according to the preceding claim, wherein the articulated connection (20) between the bristle holder (8) and the transmission member (9) has an additional degree of freedom in addition to its articulation about the axis of articulation (21), allowing in particular a translatory motion between the drive rocker and the bristle holder in the direction of the axis of articulation (21), wherein the drive rocker (12) preferably sits in a longitudinal slot-shaped recess (22) in the bristle holder (8).

3. The toothbrush according to any one of the preceding claims, wherein the bristle holder (8) is arranged on the handpiece (1) so that it is displaceable along the axis of rotation (18) of the bristle holder and the articulated connection (20) between the bristle holder (8) and the drive rocker (12) has transmission means acting in the direction of the axis of articulation (21), at least partially transmitting the movements of the drive rocker (12) in the direction of the axis of articulation (21) to the bristle holder (8), wherein the drive rocker (12) preferably sits in a recess (22, 25), the longitudinal extent of which in the direction of the axis of articulation (21) is smaller than the amplitude of the motion of the drive rocker in the direction of the axis of articulation.

4. The toothbrush according to any one of the preceding claims, wherein the bristle holder (8) sits on the drive rocker (12) substantially free from play in the direction of the axis of articulation (21).

5. The toothbrush according to any one of the preceding claims, wherein the transmission member (9) is connected at its end facing the motor to the motor (4) via a cam mechanism, preferably being coupled directly in an articulated manner to a cam (15) sitting in a torque-proof manner on the motor shaft (10), so that the motor end of the transmission member (9) can be driven on a circular path.

6. The toothbrush according to any one of the preceding claims, wherein a bearing member (13) that is adjustable in the longitudinal direction of the toothbrush, preferably a longitudinally displaceable bearing ring, is provided for bearing the transmission member (9) between the motor and the bristle holder.

7. The toothbrush according to any one of the preceding claims, wherein a seal (14) that is formed in particular by the transmission bearing is provided to seal the transmission member (9) with respect to a toothbrush housing (6).

8. The toothbrush according to any one of the preceding claims, wherein the transmission member (9) is a one-piece rigid rod, preferably embodied as a simple straight wire having no angles, bends or the like.

9. The toothbrush according to any one of the preceding claims, wherein the motor (4) is supported with its drive shaft (10) inside the handpiece (1) aligned in the longitudinal direction of the toothbrush.

10. The electric toothbrush according to any one of the preceding claims, wherein a motor-supporting chassis (27) is provided that can be attached to the motor mount inside a toothbrush housing section (6) to support the motor, wherein the chassis (27) together with the motor (4) attached thereto can be inserted into the toothbrush housing section through a frontal opening of said toothbrush housing section in the longitudinal direction of the toothbrush and can be fixedly engaged thereon.

11. The toothbrush according to the preceding claim 10, wherein the chassis engages automatically with the toothbrush housing through the linear insertion movement of the chassis.

12. The toothbrush according to any one of the preceding claims 10 or 11, wherein the chassis has a battery receptacle (29) and supports a switch unit (31), and the chassis together with the motor, battery and switch unit can be inserted as a preassembled unit into the toothbrush housing section (6).

13. The toothbrush according to any one of the preceding claims 10 to 12, wherein a contact breaker button (31) movably mounted on the chassis (27) is provided as the switch unit, operation thereof causing a battery situated in the battery compartment to be disconnectable from a battery contact (30).

14. The toothbrush according to any one of the preceding claims 10 to 13, wherein a rotational coding (34) is provided on the chassis (27) and/or on the toothbrush housing section (6), allowing insertion of the chassis in only one rotational position relative to the toothbrush housing section.

15. The toothbrush according to any one of the preceding Claims 10 to 14, wherein an insertion guide (33), in particular in the form of longitudinal ribs (34) is provided on the chassis (27) and/or on the toothbrush housing section (6).

16. The toothbrush according to any one of the preceding Claims 10 to 15, wherein a housing cap (40) can be placed onto, in particular can be screwed onto the toothbrush housing opening through which the chassis (27) can be inserted, wherein the housing cap (40) preferably closes the battery receptacle of the chassis (27).

17. The toothbrush according to any one of the preceding claims, wherein only one movable bristle array is provided on the bristle holder (8).

18. The toothbrush according to any one of the preceding claims, wherein the brush head has at least one stationary bristle array (26) and one movable bristle array (19) arranged on the bristle holder (8).

19. The toothbrush according to any one of the preceding claims, wherein the movable bristle array has an approximately circular contour and can be driven in a rotational oscillating manner and/or is arranged on a frontal end of the brush head (2).

## Revendications

1. Brosse à dents électrique avec un manche (1), un support de poils (8) monté de façon rotative autour d'un axe de rotation (18) du support de poils sur une section de tête (2) du manche (1), ainsi qu'avec un entraînement (4, 9) pour le support de poils, l'entraînement comportant un moteur (4) disposé sur le manche, et un élément de transmission (9) transmettant un mouvement d'entraînement du moteur vers le support de poils, une bascule d'entraînement (12) disposée de façon à pouvoir basculer autour de plusieurs axes étant prévue en tant qu'élément de transmission (9), **caractérisée en ce que** la bascule d'entraînement (12) peut être entraînée de telle manière par le moteur, qu'elle effectue un mouvement circonférentiel en forme de double cône, et **en ce que** la liaison (20) entre la bascule d'entraînement (12) et le support de poils (8) est conçue de façon articulée autour d'un axe articulé (21) parallèle à l'axe de rotation (18) du support de poils (8).

2. Brosse à dents selon la revendication précédente, dans laquelle la liaison articulée (20) entre le support de poils (8) et l'élément de transmission (9), outre le fait d'être articulée autour de l'axe articulé (21), permet un degré de liberté supplémentaire, notamment un mouvement de translation entre la bascule d'entraînement et le support de poils dans la direction de l'axe articulé (21), la bascule d'entraînement (12) étant de préférence montée dans un évidement en forme de fente longitudinale (22) dans le support de poils (8).

3. Brosse à dents selon l'une des revendications précédentes, dans laquelle le support de poils (8) est disposé de façon à pouvoir se déplacer sur le manche (1) le long de l'axe de rotation (18) du support de poils, et la liaison articulée (20) entre le support de poils (8) et la bascule d'entraînement (12) comportant des moyens de transmission actifs en direction de l'axe articulé (21), qui transmettent des mouvements de la bascule d'entraînement (12) en direction de l'axe articulé (21) au moins partiellement vers le support de poils (8), la bascule d'entraînement (12) étant de préférence montée dans un évidement (22, 25) dont l'étendue longitudinale en direction de l'axe articulé (21) est inférieure à l'amplitude du mouvement de la bascule d'entraînement dans la direction de l'axe articulé.

4. Brosse à dents selon l'une des revendications précédentes, dans laquelle le support de poils (8) est monté essentiellement sans jeu sur la bascule d'entraînement (12) en direction de l'axe articulé (21).

5. Brosse à dents selon l'une des revendications précédentes, dans laquelle l'élément de transmission (9) est accouplé avec le moteur (4) par son extrémité tournée vers le moteur, par l'intermédiaire d'un mécanisme excentrique, en étant de préférence directement articulé sur un excentrique (15) monté de façon solidaire en rotation sur l'arbre de moteur (10), si bien que l'extrémité côté moteur de l'élément de transmission (9) peut être entraînée sur une voie circulaire.

6. Brosse à dents selon l'une des revendications précédentes, dans laquelle un élément de palier (13) réglable dans le sens longitudinal de la brosse à dents, de préférence une bague de roulement déplaçable dans la longueur, est prévu pour le logement de l'élément de transmission (9) entre le moteur et le support de poils.

7. Brosse à dents selon l'une des revendications précédentes, dans laquelle un joint d'étanchéité (14), notamment formé par le palier de l'élément de transmission, est prévu pour isoler l'élément de transmission (9) par rapport à un boîtier de brosse à dents (6).

8. Brosse à dents selon l'une des revendications précédentes, dans laquelle l'élément de transmission (9) est une tige figée monopièce, conçu de préférence comme un simple fil de fer rectiligne, exempt de pièces angulaires, de coudes et autres.

9. Brosse à dents selon l'une des revendications précédentes, dans laquelle le moteur (4) est logé à l'intérieur du manche (1), avec son arbre d'entraînement (10) orienté dans le sens longitudinal de la brosse à dents.

10. Brosse à dents électrique selon l'une des revendications précédentes, dans laquelle un châssis (27) pouvant être fixé au moteur pour le montage du moteur à l'intérieur d'une section de boîtier (6) de brosse à dents est prévu pour soutenir le moteur, le châssis (27) pouvant être introduit dans la section de boîtier de brosse à dents, ensemble avec le moteur (4) auquel il est fixé, dans le sens longitudinal de la brosse à dents, en passant par une ouverture côté frontal de la section de boîtier de brosse à dents, et pouvant être encliqueté dedans en position fixe.

11. Brosse à dents selon la précédente revendication 10, dans laquelle le châssis s'enclenche automatiquement dans le boîtier de brosse à dents grâce au mouvement d'introduction rectiligne du châssis.

12. Brosse à dents selon l'une des précédentes revendications 10 ou 11, dans laquelle le châssis comporte un logement de pile (29) et porte une unité de commutation (31), et le châssis y compris le moteur, la pile et l'unité de commutation peut être introduite en tant qu'unité présente invention-assemblée dans la section de boîtier (6) de brosse à dents.

13. Brosse à dents selon l'une des précédentes revendications 10 à 12, dans laquelle une touche d'interrupteur (31) montée de façon mobile sur le châssis (27) est prévue en tant qu'unité de commutation, dont l'actionnement permet de séparer une pile disposée dans le compartiment à pile du contact de pile (30).

14. Brosse à dents selon l'une des précédentes revendications 10 à 13, dans laquelle un codage rotatif (34) est prévu sur le châssis (27) et/ou sur la section de boîtier (6) de brosse à dents, pour permettre une introduction du châssis dans une seule position de rotation par rapport à la section de boîtier de brosse à dents.

15. Brosse à dents selon l'une des précédentes revendications 10 à 14, dans laquelle un guidage d'introduction (33), en particulier sous la forme de nervures longitudinales (34), est prévu sur le châssis (27) et/ou sur la section de boîtier (6) de brosse à dents.

16. Brosse à dents selon l'une des précédentes revendications 10 à 15, dans laquelle un capuchon de boîtier (40) peut être placé, notamment vissé, sur l'ouverture de boîtier de brosse à dents, par laquelle le châssis (27) peut être introduit, le capuchon de boîtier (40) fermant de préférence le compartiment à pile du châssis (27).

17. Brosse à dents selon l'une des revendications précédentes, dans laquelle est prévu un seul champ de poils mobile, disposé sur le support de poils (8).

18. Brosse à dents selon l'une des revendications précédentes, dans laquelle la tête de brosse comporte au moins un champ de poils (26) stationnaire, ainsi qu'un champ de poils (19) mobile disposé sur le support de poils (8).

19. Brosse à dents selon l'une des revendications précédentes, dans laquelle le champ de poils mobile présente un contour à peu près circulaire, peut être entraîné par oscillation rotative et/ou est disposé à une extrémité côté frontal de la tête de brosse (2).
